# EUROPÄISCHE PATENTANMELDUNG

(11) **EP 4 751 625 A2**
(43) Veröffentlichungstag der Anmeldung: **03.06.2026**
(21) Anmeldenummer: 25218924.6
(22) Anmeldetag: 27.11.2025
(51) Int. Cl.: A47J 37/07

(54) **HALTEVORRICHTUNG, MODULARE GRILLVORRICHTUNG UND FEUERLAGE**

(30) Priorität: 27.11.2024 DE 102024135087
(71) Anmelder: Schweizer, Christoph, 96450 Coburg (DE)
(72) Erfinder: SCHWEIZER, Christoph, 96450 Coburg (DE)
(74) Vertreter: Isarpatent

(57) **Zusammenfassung**

Die Erfindung betrifft eine Haltevorrichtung zum Halten von Grillgut, mit einem Basiselement, das zum direkten oder indirekten Halten des Grillguts ausgebildet ist, einem Winkelelement, das zur Ausrichtung des Basiselements gegenüber einer Grillvorrichtung ausgebildet ist, wobei das Winkelelement zur Ausrichtung des Basiselement in zumindest zwei unterschiedlichen Winkeln bezüglich der Grillvorrichtung ausgebildet ist, und wobei das Basiselement zum Halten des Grillguts während eines Grillvorgangs und während eines Serviervorgangs ausgebildet ist.

Des Weiteren betrifft die Erfindung eine modulare Grillvorrichtung und eine Feuerlage.

## Beschreibung

### GEBIET DER ERFINDUNG

Die vorliegende Erfindung betrifft eine Haltevorrichtung zum Halten von Grillgut. Die vorliegende Erfindung betrifft ferner eine insbesondere modulare Grillvorrichtung und eine Feuerlage.

### TECHNISCHER HINTERGRUND

Grillvorrichtungen sind aus dem Stand der Technik bekannt. Diese können beispielsweise aus einer Grilltonne oder einer Feuertonne bestehen, wobei auf der Oberseite der Tonne eine Feuerplatte aufgebracht ist. In einem Innenraum innerhalb der Grilltonne bzw. der Feuertonne ist eine Wärmequelle angeordnet, die beispielsweise aus einem offenen Feuer bestehen kann. Dadurch kann die Feuerplatte erhitzt werden. In der Feuerplatte ist dabei bevorzugt ein Grilleinsatz vorgesehen, auf den beliebiges Grillgut aufgelegt werden kann.

Bei einer derartigen Grillvorrichtung kommt beispielsweise dem Abstand zwischen der Wärmequelle und dem Grillgut eine besondere Bedeutung zu. So kann insbesondere für unterschiedliches Grillgut ein unterschiedlicher Abstand notwendig sein, um die einzubringende Hitze zu regulieren. Dabei kann weiterhin die Art der Wärmequelle entscheidend sein, ob es sich beispielsweise um eine glühende Holzkohle, einen Rauchkorb, oder um eine mit Gas betriebene Wärmequelle handelt. Grilltonnen bzw. Feuertonnen werden meist für größere Veranstaltungen eingesetzt, wo eine Vielzahl von Personen mit Grillgut versorgt werden soll. Dabei ist es vorteilhaft, wenn die Grilltonne des Weiteren eine Aufbewahrung von Grillzubehör bietet und/oder die Möglichkeit des Verweilens bzw. des Abstellens von Getränken, Speisen oder Ähnliches für die Besucher ermöglicht.

Sollen unterschiedliche Grillgüter zubereitet werden, können weiterhin unterschiedliche Grilleinsätze notwendig sein. Dabei ist der Austausch der Grilleinsätze in der Feuerplatte meist nur im abgekühlten Zustand möglich, was die zeitnahe Verwendung bzw. den zeitnahen Austausch der Grilleinsätze erschwert.

Weiterhin kann der Transport einer entsprechenden Grillvorrichtung an einen gewünschten Ort schwierig sein, wenn die Grillvorrichtung eine gewisse Größe aufweist.

### ZUSAMMENFASSUNG DER ERFINDUNG

Vor diesem Hintergrund liegt der vorliegenden Erfindung die Aufgabe zugrunde, eine verbesserte Haltevorrichtung, Grillvorrichtung und/oder Feuerlage anzugeben.

Des Weiteren ist Aufgabe der Erfindung, die Möglichkeit einer Greifvorrichtung bzw. Haltevorrichtung vorzuschlagen, die es ermöglicht, Grillgut in unterschiedlichen Positionen und Winkeln zu Halten und/oder direkt vom der Grillvorrichtung aus an eine beliebige Position zu servieren.

Erfindungsgemäß wird diese Aufgabe durch eine Haltevorrichtung mit den Merkmalen des Anspruchs 1, eine modulare Grillvorrichtung mit den Merkmalen des Anspruchs 6 und/oder durch eine Feuerlage mit den Merkmalen des Anspruchs 10 gelöst.

Demgemäß ist vorgesehen:
- Eine Haltevorrichtung zum Halten von Grillgut, mit einem Basiselement, das zum direkten oder indirekten Halten des Grillguts ausgebildet ist, einem Winkelelement, das zur Ausrichtung des Basiselements gegenüber einer Grillvorrichtung ausgebildet ist, wobei das Winkelelement zur Ausrichtung des Basiselements in zumindest zwei unterschiedlichen Winkeln bezüglich der Grillvorrichtung ausgebildet ist, und wobei das Basiselement zum Halten des Grillguts während eines Grillvorgangs und während eines Serviervorgangs ausgebildet ist.
- Eine modulare Grillvorrichtung, mit einem tonnenförmigen Basiselement, aufweisend einen Innenraum zur Aufnahme einer Wärmequelle, wobei das tonnenförmige Basiselement zum Tragen einer Feuerplatte ausgebildet ist, wobei das tonnenförmige Basiselement aus einzelnen bogenförmigen Teilsegmenten ausgebildet ist, und wobei das tonnenförmige Basiselement ein Türelement aufweist, das einen seitlichen Zugang in das tonnenförmige Basiselement ermöglicht.
- Eine Feuerlage für eine Grillvorrichtung, mit einer Bodenplatte, die zur Auflage einer Wärmequelle ausgebildet ist und einer Bedieneinrichtung, die mit der Bodenplatte verbunden und zum Heben und Senken der Bodenplatte ausgebildet ist, wobei die Bedieneinrichtung zumindest ein Zugelement aufweist, das an einem Gehäuse der Grilleinrichtung führbar ist, wobei durch Verschiebung des Zugelements die Bodenplatte bewegbar ist.

Die der vorliegenden Erfindung zugrundeliegende Erkenntnis besteht darin, dass durch eine flexible Ausgestaltung der unterschiedlichen Bestandteile der Haltevorrichtung und/oder der Grillvorrichtung beziehungsweise der Feuerlage die unterschiedlichen Anwendungsfälle individuell umgesetzt werden können.

Die der vorliegenden Erfindung zugrundeliegende Idee besteht zum einen darin, eine Haltevorrichtung vorzuschlagen, die ein Ausrichten von Grillgut in einem beliebigen Winkel bezüglich einer Grillvorrichtung ermöglicht. Dabei kann die Haltevorrichtung zum Halten des Grillguts während des Grillvorgangs an der Grillvorrichtung befestigt werden und ebenso zum Servieren des Grillguts nach Abschluss des Grillvorgangs dienen.

Die der vorliegenden Erfindung zugrundeliegende Idee besteht zum weiterhin darin, eine modulare Grillvorrichtung vorzuschlagen, die leicht transportierbar und einfach auf- und abgebaut werden kann.

Die der vorliegenden Erfindung zugrundeliegende Idee besteht weiterhin darin, eine Feuerlage und eine Grillvorrichtung vorzuschlagen, bei welcher der Abstand zwischen der Wärmequelle und der Feuerplatte individuell eingestellt werden kann.

Die erfindungsgemäße Haltevorrichtung kann vorteilhafterweise werkzeugfrei an einem Grill bzw. an unterschiedlichen Grillvorrichtungen befestigt werden. Dabei kann die erfindungsgemäße Haltevorrichtung an beliebigen Positionen an den Grill bzw. der Grillvorrichtung angebracht werden. Die Haltevorrichtung kann daher bevorzugt zum einen in einem beliebigen Winkel zu einer Wärmequelle der Grillvorrichtung positioniert werden, um Grillgut, dass an der Haltevorrichtung befestigt ist, zu grillen. Weiterhin kann die Haltevorrichtung zum Servieren bzw. Präsentieren des Grillguts nach dem Grillvorgang dienen, wobei die Haltevorrichtung ebenso zur Auflage des Grillguts nach dem Grillvorgang dienen kann. So kann das Grillguts direkt nach dem Grillvorgang präsentiert bzw. serviert werden, wodurch ein Verzehr in direkter Umgebung der Grillvorrichtung umgesetzt werden kann. Mit anderen Worten kann ein völlig freies, werkzeugloses und bequemes Grillmanagement für unterschiedliches Grillgut mit direkter Präsentiermöglichkeit sowie Serviermöglichkeit bereitgestellt werden, das für Grillvorrichtungen wie beispielsweise Feuerschalen, Grills, Feuertonnen und Planchas dienen kann.

In einer möglichen Ausführungsform können das Basiselement und das Winkelelement einteilig ausgeführt sein, sodass die Haltevorrichtung direkt auf den Rand einer Feuerschale, eines Grills oder ähnliches aufgesteckt werden kann.

In einer weiteren Ausführungsform können das Basiselement und das Winkelelement aus unterschiedlichen Bauteilen bestehen, wobei das Basiselement in einem beliebigen Winkel zum Winkelelement platziert werden kann. In einer derartigen Ausführungsform dient das Winkelelement insbesondere auch zum Befestigen der Haltevorrichtung an einer Grillvorrichtung, wie beispielsweise einer Feuerplatte. Diese Ausführungsform eignet sich insbesondere dann, wenn die Haltevorrichtung nicht direkt auf den Rand der Grillvorrichtung aufgesteckt werden kann, da die Grillvorrichtung eine ebene Oberfläche aufweist.

Das Basiselement ist insbesondere flächig ausgeführt, sodass das Grillgut darauf aufgelegt werden kann. Des Weiteren kann das Basiselement dazu dienen, Grillspieße o. Ä. daran zu befestigen. Das Grillgut kann beispielsweise direkt auf die Oberfläche des Basiselements aufgelegt, mit der Oberfläche des Basiselements geklemmt, oder durch ein weiteres Element an dem Basiselement befestigt werden.

Durch die unterschiedlichen Winkel kann das Grillgut unterschiedlich bezüglich der Wärmequelle angeordnet werden. So können die zumindest zwei unterschiedlichen Winkel beispielsweise jeweils in einem Bereich von 0°-90°, insbesondere von 0°-80°, bevorzugt 10°-80° liegen.

Das Basiselement ist daher bevorzugt als eine Art Flammenbrett ausgebildet, auf das beispielsweise auch unterschiedliche Aufsätze in Form von Grillaufsätzen angebracht werden können. Des Weiteren kann das Basiselement zum Servieren sowie zum Warmhalten dienen.

Bezüglich der modularen Grillvorrichtung kann ein modulares System bereitgestellt werden, das einfach transportiert und vor Ort werkzeugfrei montiert werden kann. Insbesondere handelt es sich bei der modularen Grillvorrichtung um einen Ofengrill, bevorzugt um einen vollwertigen Ofengrill, der mit gewöhnlichen Feuerplatten und sonstigen Bestandteilen kombiniert werden kann. Dabei können insbesondere Holzscheide bis 50 cm in das Basiselement eingelegt werden. Des Weiteren kann die Grillvorrichtung beispielsweise mit Holzkohle, Holzbriketts, Grillbriketts, Brennpaste oder ähnlichen betrieben werden. In einer weiteren Ausführungsform ist es denkbar, dass in das Basiselement ein Gasbrenner bzw. Gaskocher eingesetzt wird. Dadurch kann eine Grilltonne bereitgestellt werden, die durch den modularen Aufbau einfach transportiert werden kann.

Die modulare Grillvorrichtung kann für Feuerplatten mit einer Ausnehmung mit einem Durchmesser von größer als 300 mm ausgebildet sein, insbesondere 360 mm bis 400 mm, bevorzugt 360 mm. Ist die Öffnung zwischen 360 mm und 400 mm, so können insbesondere auch 50 cm Holzscheite durch die Öffnungen durchgeführt werden, um der Wärmequelle zuzuführen. Gemäß einer Ausführungsform kann die Öffnung daher zur Aufnahme eines Rauchkorbs, eines Kohlekorbs, einer Grillschale, eines Grillrostes, einer Grillplatte, einer Pfanne und/oder eines Feuertopfes ausgebildet sein.

So kann die modulare Grillvorrichtung auch dazu ausgelegt sein, dass Tischelemente bzw. Sitzelemente um die Feuerplatte bzw. um das tonnenförmige Basiselement angeordnet werden.

Des Weiteren ist es denkbar, die erfindungsgemäße justierbare Feuerlage in Verbindung mit der modularen Grillvorrichtung zu verwenden.

Vorteilhafterweise verfügt die modulare Grillvorrichtung über ein Türelement, das seitlich an dem tonnenförmigen Basiselement angeordnet ist. Dies bietet den Vorteil, dass die Grillvorrichtung "von der Seite" auch während des Grillens bzw. des Beheizens befeuert werden kann. Mit dem Türelement kann demnach ein Zugang geschaffen werden, der durch eine geschlossene Tonne nicht bereitgestellt werden kann.

Die Teilsegmente des Basiselements sind bogenförmig ausgebildet. Dies bedeutet insbesondere, dass einzelne Bogenabschnitte zusammen eine Kreisform ausbilden können. So kann das Basiselement beispielsweise aus drei Teilsegmenten bestehen, die insbesondere jeweils identisch ausgeführt sind. Jedes Teilsegment kann demnach aus einem Drittelkreissegment ausgebildet sein. Insbesondere sind Teilsegmente derart ausgebildet, dass diese sich zumindest abschnittsweise überlappen. So kann eine einfache Montage durch Klemmelemente erfolgen.

Die Module bzw. die Elemente der modularen Grillvorrichtung können beispielsweise aus Edelstahl und/oder aus Cortenstahl ausgebildet sein. Durch die einzelnen Module kann die Grillvorrichtung platzsparend zerlegt werden.

Es ist ebenso denkbar, die erfindungsgemäße Haltevorrichtung an einer Feuerplatte zu montieren, welche in Verbindung mit der modularen Grillvorrichtung eingesetzt wird.

Die Erfindung beschreibt weiterhin eine Feuerlage, die insbesondere als justierbare Feuerlage bezeichnet werden kann. Diese kann für unterschiedliche Grillvorrichtungen eingesetzt bzw. nachgerüstet werden. Eine Wärmemenge für eine Grillvorrichtung wird unter anderem durch die Art und Größe des Feuers bzw. der Glut, eine Abstandsänderung des Grillrostes zum Feuer sowie ein Platzieren des Grillguts auf dem Grillrost bzw. der Feuerplatte bestimmt. Durch die justierbare Feuerlage ist es möglich, die Hitze für den Grill bzw. die Plancha zu dosieren, indem die Feuerlage in unterschiedlichen Höhen angeordnet wird. Dabei kann insbesondere eine Justierung über eine Distanz von 50 cm bis 1 m, bevorzugt bis zu 70 cm, innerhalb der Grillvorrichtung erfolgen. Daher ist die Feuerlage auch für relativ große Grillvorrichtungen geeignet. Die Einstellung der Höhenposition kann insbesondere stufenlos mit einem geringen Kraftaufwand umgesetzt werden. Dabei kann die Justierung einhändig von einer Person erfolgen, ohne dass die Grillfläche oder das Grillgut berührt, oder die Grillvorrichtung geöffnet werden muss. Die Mechanik zur Justierung der Bodenplatte ist bevorzugt innerhalb des Gehäuses vorgesehen, sodass keine störende Mechanik die Optik der Grillvorrichtung beeinflusst. Durch das Zugelement, das außerhalb des Gehäuses zugänglich ist, ist eine einfache Bedienung möglich, welche ebenso im Dunkeln sicher umgesetzt werden kann. Die Feuerlage kann an bestehenden Grillvorrichtungen nachgerüstet werden, und ist insbesondere auch für Rundgrills geeignet.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform kann das Basiselement auf einer ersten Seite zumindest eine Aufstellfläche zum Aufstellen des Basiselements während des Serviervorgangs aufweisen und auf einer zweiten Seite zumindest eine Positionierfläche zum Positionieren von zumindest einem Grillgut während des Grillvorgangs aufweisen. Die beiden Seiten sind insbesondere gegenüberliegend an dem Basiselement angeordnet. So kann das Basiselement auf der zweiten Seite eben ausgebildet sein, um das Grillgut auf eine ebene Oberfläche auflegen zu können. Auf der gegenüberliegenden Seite können beispielsweise Standfüße, Schienenelemente, Rillenelemente oder Ähnliches angeordnet sein, um das Basiselement auf einer Oberfläche abzustellen, während sich das Grillgut noch auf der zweiten Seite befindet.

Gemäß einer Ausführungsform kann auf der zweiten Seite bevorzugt zumindest ein Grillaufsatz einsteckbar sein. Der Grillaufsatz ist insbesondere zumindest temporär an dem Basiselement befestigt, während das Grillgut gegrillt wird. Bei dem Grillaufsatz kann es sich beispielsweise um einen Aufsatz für Flammenlachs, BBQ, Grillkäse oder Ähnliches handeln. Dadurch kann der Grillaufsatz unterschiedlich ausgeformt sein, sodass die unterschiedlich geformten Grillgüter sicher auf der Oberfläche des Basiselements gehalten werden können.

In einer bevorzugten Ausführungsform kann der Grillaufsatz mit einem Clipelement an dem Basiselement befestigt werden. Bei dem Clipelement kann es sich beispielsweise um einen Federstahl handeln. Besondere ermöglicht das Clipelement, dass der Grillaufsatz werkzeugfrei sowie stufenlos und verliersicher an das Basiselement befestigt werden kann. So können in einer bevorzugten Ausführungsform beispielsweise unterschiedliche Grillaufsätze mit nur einem Clipelement befestigt werden. Dadurch können Bauteile eingespart werden. Des Weiteren bietet das Clipelement die Möglichkeit, während eine servieren das Grillgut weiterhin sicher auf dem Basiselement zu halten. Das Clipelement ist insbesondere als u-förmiger Bügel ausgeführt.

Das Basiselement kann weiterhin dazu ausgebildet sein, Aufnahmen für die unterschiedlichen Elemente, wie Clipelement und Grillaufsätze, bereitzustellen, sodass die Elemente die momentan nicht benötigt werden, an dem Basiselement befestigt werden können. So kann beispielsweise auch ein Abziehelement vorgesehen sein, das insbesondere über einen Draht verfügt. Mit dem Ablöseelement und dem Draht kann daher ein Ablösen von festgebranntem oder schwer zu lösendem Grillgut von dem Basiselement ermöglicht werden. Wird das Ablöseelement nicht benötigt, kann dieses bevorzugt ebenso an einer vorgesehenen Aufnahme an dem Basiselement befestigt und sicher gehalten werden.

Gemäß einer Ausführungsform kann das Basiselement zumindest eine Aufnahme für einen Grillspieß aufweisen. Bei dem Grillspieß kann es sich beispielsweise um einen Steckerl für Steckerlfisch handeln. So können beispielsweise zwei oder mehr Grillspieße nebeneinander an dem Basiselement befestigt werden, insbesondere eingesteckt werden. Durch Ausrichtung des Basiselements in einem gewünschten Winkel kann daher das Grillgut, welches auf dem Grillspieß aufgespießt ist, beliebig gegrillt werden. An dem Grillspieß können beispielsweise Löcher für Spreizringe für Fische oder andersartiges Grillgut vorgesehen sein.

Gemäß einer Ausführungsform kann das Basiselement als Hitzeschild ausgebildet sein. Dadurch kann eine Bedienung ohne Handschuhe möglich sein.

Gemäß einer Ausführungsform kann das Winkelelement einen ersten Halteabschnitt, der zur Befestigung an der Grillvorrichtung ausgebildet ist, und einen zweiten Halteabschnitt, der zur Befestigung mit dem Basiselement ausgebildet ist, umfassen. In einer derartigen Ausführungsform sind das Basiselement und das Winkelelement insbesondere als zwei unterschiedliche Elemente ausgebildet. So kann das Basiselement an den zweiten Halteabschnitt mit dem Winkelelement befestigt werden. Das Winkelelement kann weiterhin eine beliebige Geometrie aufweisen, sodass dieses, insbesondere mit zumindest einem weiteren Befestigungselement, an einer Grillvorrichtung befestigt werden kann. Dabei kann das Winkelelement in einer derartigen Ausführungsform insbesondere auf einer Feuerplatte befestigt werden.

Gemäß einer Ausführungsform kann der erste Halteabschnitt an einem Schieberelement des Winkelelements angeordnet sein, das entlang einer Feuerplatte anordnebar und an der Feuerplatte befestigbar ist. Durch das Schieberelement kann es insbesondere ermöglicht werden, dass eine gewünschte Distanz zum Feuer eingestellt werden kann. So ist das Schieberelement insbesondere als längliches Stabelement bzw. als längliches Auflageelement ausgebildet, wobei das Schiebeelement an einer beliebigen Position auf einer Feuerplatte befestigt werden kann. Die Befestigung erfolgt auch hier insbesondere werkzeugfrei, beispielsweise mit zumindest einem Befestigungselement wie einer Öse oder einer Adapterklemme.

Gemäß einer Ausführungsform kann das Winkelelement eine Führungskontur aufweisen, wobei ein Fortsatz in der Führungskontur derart geführt ist, dass eine stufenlose Winkeleinstellung ermöglicht wird. In einer derartigen Ausführungsform ist es insbesondere möglich, den Winkel stufenlos während des Grillvorgang einzustellen bzw. zu ändern. Dadurch ist insbesondere eine Drehradklemmung bzw. Drehradanordnung vorgesehen, um den Fortsatz stufenlos in der Führungskontur zu fixieren. Die Führungskontur beschreibt insbesondere eine Kreisform bzw. eine Teilkreisform, sodass der Fortsatz entlang dieser Teilkreisform bzw. Kreisform geführt werden kann. Über die Drehradklemmung kann der Fortsatz an der gewünschten Position in der Führungskontur geklemmt werden. Dabei ist es insbesondere vorgesehen, dass der Fortsatz an einer Art Griffelement angeordnet ist, das bezüglich des Schieberelements bewegt werden kann. So kann das Griffelement insbesondere bezüglich des Schiebeelements verschwenkt werden, um die unterschiedlichen Winkel einzustellen. Auch das Griffelement befindet sich bevorzugt hinter dem Hitzeschild, sodass dieses ohne Handschuhe bedient werden kann. Bevorzugt sind das Schieberelement und das Griffelement V-förmig zueinander angeordnet, wobei das Griffelement insbesondere der Neigung des Basiselements folgt.

Gemäß einer Ausführungsform der modularen Grillvorrichtung kann eine kreisförmige Fußstange umfasst sein, welche durch Standfüße der Grillvorrichtung geführt ist. Die kreisförmige Fußstange kann einen runden Querschnitt aufweisen. Die Fußstange kann beispielsweise zur Stabilisierung dienen, um der modularen Grillvorrichtung statische Stabilität zu verleihen. Insbesondere weist die Fußstange einen größeren Durchmesser als das Basiselement auf. Dadurch kann die Stabilität vergrößert werden.

Gemäß einer Ausführungsform der modularen Grillvorrichtung kann die Teilsegmente über Klemmelemente derart verbunden sein, dass eine werkzeugfreie Montage und Demontage möglich ist. So können die einzelnen Module bzw. Elemente beispielsweise über Steckverbindungen verfügen und/oder Überlappstöße aufweisen.

Gemäß einer Ausführungsform der modularen Grillvorrichtung kann eine Bodenplatte und Standfüße über Steckverbindungen mit dem tonnenförmigen Basiselement verbunden sind. In einer bevorzugten Ausführungsform können drei Standfüße vorhanden sein, die gemäß einem Dreibein angeordnet sind. Die Standfüße können über Vorsprünge verfügen, welche in das Basiselement sowie in die Bodenplatte eingreifen können. Dadurch können die Elemente zueinander platziert werden. Des Weiteren können Klemmelemente oder Steckverbindung vorgesehen sein, beispielsweise Klammern und Stifte, um die Elemente werkzeugfrei aneinander zu fixieren.

Gemäß einer Ausführungsform der Feuerlage kann das Zugelement als flexibles Ketten- und/oder Seilelement ausgebildet sein, das an zumindest zwei Angriffsunkten mit der Bodenplatte verbunden und/oder an zumindest drei Kontaktpunkten an dem Gehäuse führbar ist. Insbesondere sind die Abschnitte, die innerhalb des Gehäuses geführt werden, im Wesentlichen als Seilelemente ausgeführt. Der Abschnitt, der von einer Person erreicht werden kann, und damit von dem Inneren des Gehäuses nach außen geführt wird, ist insbesondere als Kettenelement ausgeführt. Dadurch kann durch die einzelnen Kettenglieder gleichzeitig eine Arretierung durch eine einfache Mechanik erfolgen, welche sich in ein Kettenglied einhaken kann, um die Bodenplatte in einer gewünschten Höhe zu fixieren.

Gemäß einer Ausführungsform der Feuerlage kann zumindest ein Führungsprofil umfasst sein, das mit dem Gehäuse verbindbar ist, wobei das Zugelement entlang des Führungsprofils geführt ist. Insbesondere kann das Zugelement an dem Führungsprofil umgelenkt werden, bevorzugt um einen Winkel von 90° bis 180°. Das Zugelement kann zumindest eine Umlenkungsrolle, eine Ringöse, eine Ringschraube, eine Ringmutter o. Ä. aufweisen. Insbesondere sind drei Führungsprofile vorgesehen, die gleichbeanstandet auf einem oberen Rand des Gehäuses der Grillvorrichtung angeordnet werden können. Dabei können die Führungsprofile beispielsweise über Steckverbindungen, Stiftelemente, Klemmelemente o. Ä. an dem Gehäuse fixiert werden. Die Führungsprofile können ebenso dazu dienen, Module bzw. Teilsegmente, insbesondere bogenförmige Teilsegmente, der modularen Grillvorrichtung miteinander zu verbinden.

Gemäß einer Ausführungsform der Feuerlage kann das Führungsprofil einen Verbindungsabschnitt zum Verbinden mit dem Gehäuse, einen Führungsabschnitt zum Führen des Zugelements, einen Hakenabschnitt zur Ausbildung eines Hakenelements und/oder einen Auflagerabschnitt zum Lagern einer Feuerplatte oder eines Grillrostes aufweisen. Die Führungsprofile können insbesondere bei einer Grilltonne eingesetzt werden, wobei auf das obere Ende der Grilltonne eine Feuerplatte oder ein Grillrost aufgelegt werden kann. So können die Führungsprofile ebenso Vorsprünge aufweisen, an welchen sich das Grillrost bzw. die Feuerplatte einhaken kann.

Gemäß einer Ausführungsform der Feuerlage kann das Zugelement zumindest abschnittsweise innerhalb des Gehäuses, insbesondere parallel entlang einer Gehäusewand, führbar sein und das Bedienelement ein Griffelement aufweisen, das mit dem Zugelement verbunden und außerhalb des Gehäuses anordenbar ist. Das Zugelement kann parallel nebeneinander verlaufende Abschnitte aufweisen, die beispielsweise in der Ebene der Bodenplatte, in der Ebene des Bodens des Gehäuses, oder an einem oberen Rand des Gehäuses, umgelenkt werden. Dadurch kann auch eine Art Flaschenzug bereitgestellt werden, wodurch die Kräfte zum Bewegen der justierbaren Feuerlage reduziert werden können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Grillvorrichtung mit einer Haltevorrichtung in einer möglichen Ausführungsform;
- Fig. 2: eine Vergrößerung aus Fig. 1;
- Fig. 3: mögliche Ausführungsformen eines Basiselements;
- Fig. 4: eine mögliche Ausführungsform eines Grillaufsatzes;
- Fig. 5: mögliche Ausführungsformen eines Basiselements;
- Fig. 6: eine mögliche Verwendung eines Basiselements;
- Fig. 7: mögliche Ausführungsformen eines Grillaufsatzes;
- Fig. 8: eine Grillvorrichtung mit einer Haltevorrichtung in einer möglichen Ausführungsform;
- Fig. 9: mögliche Ausführungsformen eines Basiselements;
- Fig. 10: eine Grillvorrichtung mit einer Haltevorrichtung in einer möglichen Ausführungsform;
- Fig. 11: eine Vergrößerung aus Fig. 10;
- Fig. 12: eine weitere Ansicht der Ausführungsform aus Fig. 10;
- Fig. 13: eine weitere Ansicht der Ausführungsform aus Fig. 10;
- Fig. 14: eine Grillvorrichtung mit einer Haltevorrichtung in einer möglichen Ausführungsform;
- Fig. 15: eine Vergrößerung aus Fig. 14;
- Fig. 16: eine weitere Ansicht der Ausführungsform aus Fig. 14;
- Fig. 17: eine Vergrößerung aus Fig. 16;
- Fig. 18: eine Grillvorrichtung mit einer Haltevorrichtung in einer möglichen Ausführungsform;
- Fig. 19: eine Grillvorrichtung mit einer Haltevorrichtung in einer möglichen Ausführungsform;
- Fig. 20: Elemente einer Grillvorrichtung mit einer Haltevorrichtung in einer möglichen Ausführungsform;
- Fig. 21: eine modulare Grillvorrichtung in einer möglichen Ausführungsform;
- Fig. 22: ein Ausschnitt aus Fig. 21;
- Fig. 23: ein Ausschnitt aus Fig. 21;
- Fig. 24: eine modulare Grillvorrichtung in einer möglichen Ausführungsform;
- Fig. 25: eine justierbare Feuerlage in einer möglichen Ausführungsform;
- Fig. 26: ein Führungsprofil in einer möglichen Ausführungsform;
- Fig. 27: eine weitere Ansicht der Ausführungsform aus Fig. 25;
- Fig. 28: eine weitere Ansicht der Ausführungsform aus Fig. 25;
- Fig. 29: eine weitere Ansicht der Ausführungsform aus Fig. 25;
- Fig. 30: ein Führungsprofil in einer möglichen weiteren Ausführungsform;
- Fig. 31: die Ausführung gemäß Fig. 30 mit einem Zugelement;
- Fig. 32: eine justierbare Feuerlage in einer weiteren möglichen Ausführungsform;
- Fig. 33: ein Führungsprofil in einer möglichen weiteren Ausführungsform;
- Fig. 34: weitere Ansichten der Ausführungsform gemäß Fig. 33.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

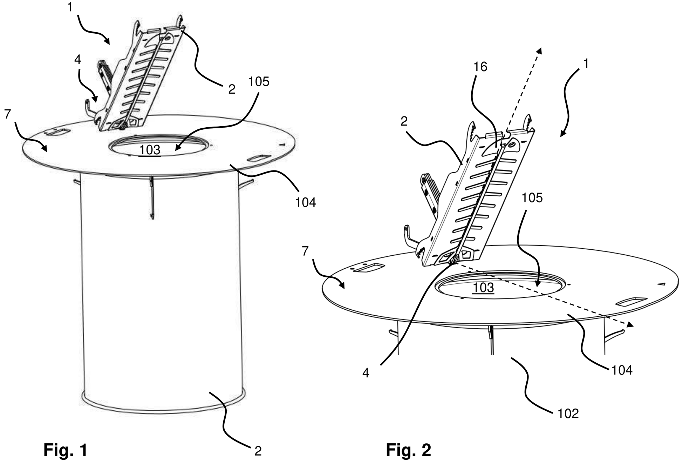

Die Figuren 1 bis 3 zeigen eine Grillvorrichtung in einer möglichen Ausführungsformen, wobei die erfindungsgemäße Haltevorrichtung und die erfindungsgemäße Feuerlage bei einer derartigen Grillvorrichtung eingesetzt werden können.

Figur 1 zeigt eine Grillvorrichtung 7 mit einem tonnenförmigen Element 102 und einer Feuerplatte 104. Das tonnenförmige Element 102 kann als mehrteilige Grilltonne ausgebildet. Die Feuerplatte 104 ist als runde Platte ausgeformt und weist eine Ausnehmung 105 auf. Die Feuerplatte 104 ist dabei mit einem größeren Querschnitt als das tonnenförmige Element 102 ausgebildet.

Um das Element 102 können Hakenelemente zur Anbringung von weiterem Zubehör unterhalb der Feuerplatte 104 angeordnet sein. Die Feuerplatte 104 ist beispielsweise beabstandet zu dem Element 102 angeordnet, sodass ein Zwischenraum zwischen Feuerplatte 104 und Element 102 resultiert. Durch diesen Zwischenraum können Armaturen geführt werden, die beispielsweise zu der Wärmequelle im Innern 103 des Elements 102 gehören. So kann beispielsweise eine Elektronik eines Gasgrills oder ähnlichen aus dem Inneren des Element 102 nach außen geführt werden, wodurch der Gasgrill auch von außen bedient werden kann.

Die Ausnehmung 105 in der Feuerplatte 104 weist insbesondere einen Durchmesser auf, der größer als 360 mm ausgebildet ist. Dadurch kann eine besonders große Öffnung in der Feuerplatte 104 ausgebildet werden, durch die eine Vielzahl an unterschiedlichen Wärmequellen eingeführt werden kann. Des Weiteren kann der Innenraum 103 des Elements 102 dadurch leicht erreicht werden.

Wie in den Figuren 1 und 2 dargestellt ist an der Grillvorrichtung 7 eine erfindungsgemäße Haltevorrichtung 1 angeordnet. Diese weist ein Basiselement 2 sowie ein Winkelelement 4 auf. An einer Seite des Basiselements 2 kann ein Grillgut (nicht dargestellt) angeordnet werden, das beispielsweise mit einem Grillaufsatz 16, sowie insbesondere einem Clipelement 18 klemmend an dem Basiselement 2 gehalten werden kann. Durch die Haltevorrichtung 1 kann das Grillgut in einem gewünschten Winkel bezüglich der Feuerplatte 104 angeordnet werden, wodurch der Abstand zu einer Wärmequelle im Innenraum 103 der Grillvorrichtung 7 angepasst werden kann.

Die Haltevorrichtung 1 kann beispielsweise eine Länge von 50 cm bis 70 cm, insbesondere 57 cm, eine Breite von 10 cm bis 20 cm, insbesondere 17 cm, und/oder eine Höhe von 4 cm bis 10 cm, insbesondere 6 cm, aufweisen. Andere Abmessungen sind ebenso denkbar. Die Haltevorrichtung 1 kann beispielsweise auch als Flammbrett bezeichnet werden.

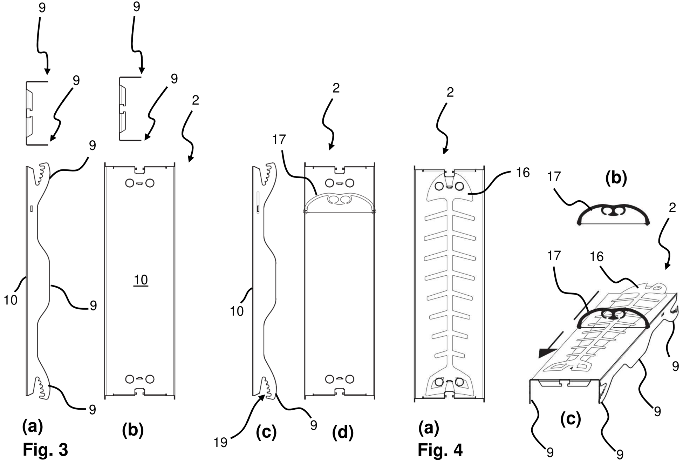

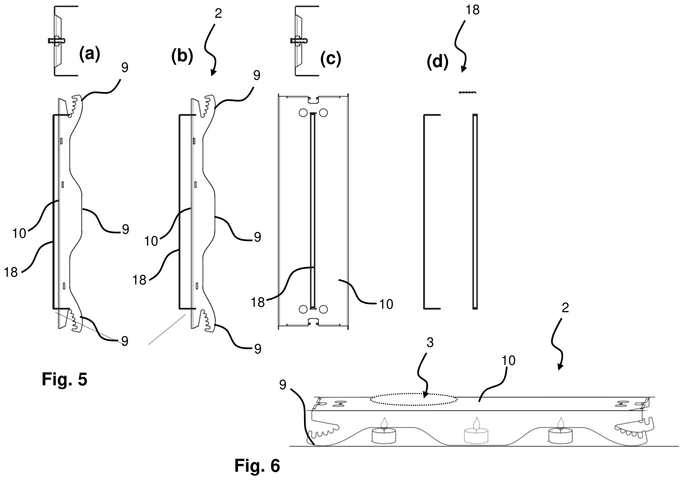

In Figur 2 sind zwei gestrichelte Pfeillinien dargestellt. Diese geben den Winkel an, in welcher das Basiselement 2 in dieser Ausführungsform bezüglich der Feuerplatte 104 geneigt ist. Der Winkel ist insbesondere als spitzer Winkel ausgeführt, insbesondere ist der Winkel zwischen 0° und 90° ausgebildet, bevorzugt zwischen 0° und 80°. Die Figuren 1 und 2 zeigen die Haltevorrichtung 1 in einer Position während einem Grillvorgang. Hingegen zeigen die Figuren 4 (c) sowie 6 Anordnungen, in welcher sich die Haltevorrichtung 1 bzw. das Basiselement 2 in einer Servierposition befindet.

Fig. 3 zeigt unterschiedliche Ansichten einer Ausführungsform eines Basiselement 2. Dabei sind in Figur 3 (a) und (c) jeweils eine Seitenansicht, Figur 3 (b) eine Draufsicht und in Figur 3 (d) eine Ansicht von unten dargestellt. Das Basiselement 2 weist eine Positionierfläche 10 auf, die insbesondere als ebene Oberfläche auf einer zweiten Seite des Basiselements 2 angeordnet ist. Auf dieser Positionierfläche 10 kann das Grillgut während des Grillvorgang angeordnet werden. Gegenüberliegend zu der zweiten Seite ist auf einer ersten Seite zumindest eine Aufstellfläche 9 vorgesehen. In der dargestellten Ausführungsform sind unterschiedliche Standfüße durch die Form des Basiselements 2 ausgebildet, um eine stabile Aufstellflächen 9 auszubilden. Weiterhin kann an der Unterseite eine Aufnahme o. Ä. vorgesehen sein, um beispielsweise ein Abziehelement 17 zu halten, während dieses nicht benutzt wird. Vorteilhafterweise ist das Abziehelement 17 daher durch ein Hitzeschild des Basiselements 2 geschützt. Figur 4 zeigt eine Ausführungsform, wobei ein Grillaufsatz 16 für einen Flammlachs an der Positionierfläche 10 des Basiselements 2 angeordnet ist. Die Form des Grillaufsatzes 16 kann dabei an die Form des Fisches angepasst sein. Dadurch können die Filetstücke sicher auf dem Basiselement 2 gehalten werden. Figur 4 (c) zeigt eine Servierposition bzw. Präsentierposition, wobei das Basiselement 2 auf der Aufstellflächen 9 aufgestellt ist. Die zweite Seite, d. h. die Positionierfläche 7, ist dabei nach oben ausgerichtet, sodass das Grillgut von dieser Oberfläche des Basiselements 2 entnommen werden kann. Wie dargestellt kann das Grillgut beispielsweise durch das Abziehelement 17 von der Oberfläche des Basiselements 2 entfernt werden. Das Abziehelement kann eine Spannweite von 15 cm bis 20 cm aufweisen, und an die Breite der Haltevorrichtung 1 angepasst sein. Andere Abmessungen sind ebenso denkbar.

Fig. 5 zeigt eine Ausführungsform, wobei das Clipelement 18 dargestellt ist. Dieses ist insbesondere aus einem Federstahl ausgebildet, und kann beispielsweise U-förmig ausgeformt sein. Das Clipelement 18 kann werkzeugfrei montiert werden, und an die Höhe des Grillguts angepasst werden. Figur 5 (d) zeigt dabei das Clipelement 18 in einer Seitenansicht, und in einer Draufsicht. An dem Basiselement 2 können insbesondere Ausnehmungen, Löcher oder Aufnahmen vorgesehen sein, um das Clipelement 18 an dem Basiselement 2 zu befestigen.

Figur 6 zeigt eine Ausführung in einer Servierposition bzw. Präsentierposition. Dabei kann das Grillgut beispielsweise auch durch Teelichter o. Ä. warmgehalten werden, die unterhalb dem Basiselement 2 angeordnet werden können. In einer bevorzugten Ausführungsform weist das Basiselement daher einen U-förmigen Querschnitt auf.

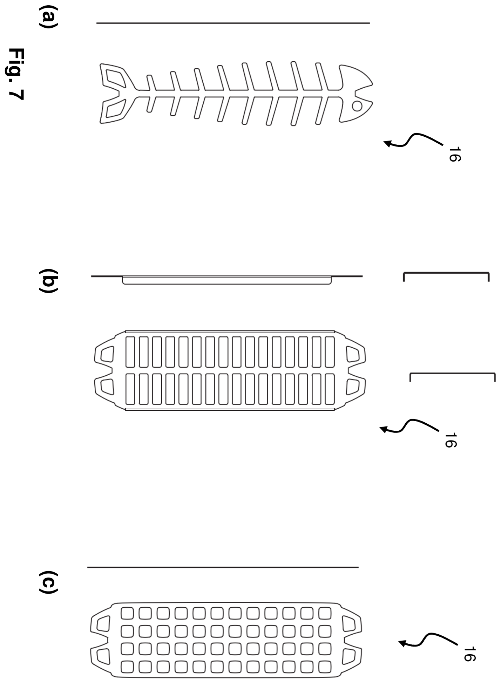

Figur 7 zeigt unterschiedliche Grillaufsätze. Figur 7 (a) zeigt einen Aufsatz für einen Flammlachs. Figur 7 (b) zeigt einen Aufsatz für BBQ. Figur 7 (c) zeigt einen Aufsatz für Grillkäse. Dabei sind jeweils Ansichten von oben sowie von der Seite dargestellt. Bezüglich Figur 7 (b) ist ebenso ein Querschnitt dargestellt, da dieser Aufsatz zumindest abschnittsweise U-förmig ausgeführt ist. Die unterschiedlichen Grillaufsätze 16 können mit dem Clipelement 18 jeweils an dem Basiselement 2, insbesondere an der Positionierfläche 10, befestigt werden.

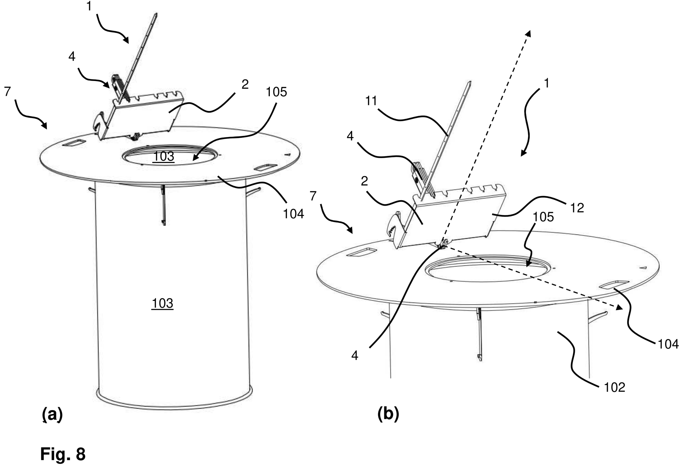

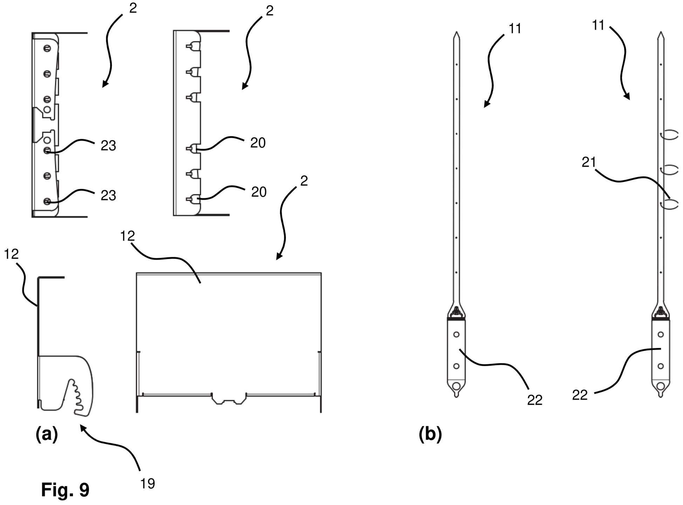

Die Figuren 8 bis 13 zeigen eine weitere Ausführungsform der Haltevorrichtung 1, wobei diese zum Halten von zumindest einem Grillspieß 11 ausgebildet ist. Der Grillspieß 11 kann beispielsweise auch für Steckerlfisch dienen. Das Basiselement 2 ist daher kürzer als in der zuvor beschriebenen Ausführungsform ausgebildet, da die Grillspieße 11 an einer Seite das Basiselement 2 überragen können, wenn diese darin eingesteckt sind. Das Basiselement 2 weist daher zumindest eine Ausnehmung 20 als Aufnahme für einen Grillspieß 11 auf, wie in Figur 9 gezeigt. Figur 9 zeigt das Basiselement 2 in vier Ansichten, eine Ansicht von unten, links oben, eine Ansicht von oben, rechts oben, eine Seitenansicht, links unten, und eine Längsansicht, rechts unten. Des Weiteren sind Aufnahmen 23, insbesondere Löcher, zur Aufnahme der Griffelemente 22 der Grillspieße 11 vorgesehen.

In Figur 9 ist weiterhin Rastabschnitt 19 erkennbar, die an dem Basiselement 2 vorgesehen sind. Diese können auch in den zuvor beschriebenen Ausführungsformen an dem jeweiligen Basiselement 2 angeordnet sein. Über diese Rastabschnitt 19 kann das Basiselement 2 direkt an einer Grillschale oder ähnlichem befestigt werden. Die Rastabschnitt 19 können daher das Winkelelement 4 ausbilden, wenn das Winkelelement 4 und das Basiselement 2 einteilig ausgebildet sind.

An den Grillspießen 11 können Spreizringe 21 vorgesehen sein, die frei drehbar in Löchern in den Grillspießen 11 gelagert sind. Die Spreizringe können für Fische oder andersartiges Grillgut dienen. Des Weiteren können die Spreizringe auch in den dafür vorgesehenen Ausnehmungen an dem Grillspießen 11 gelagert werden, wenn diese nicht benötigt werden.

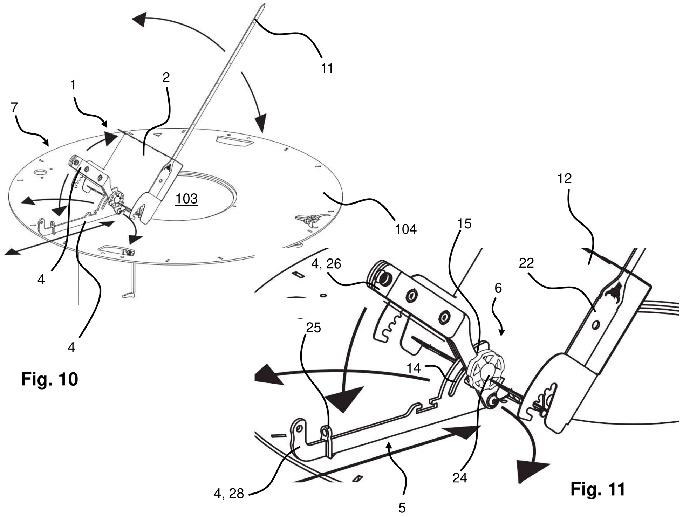

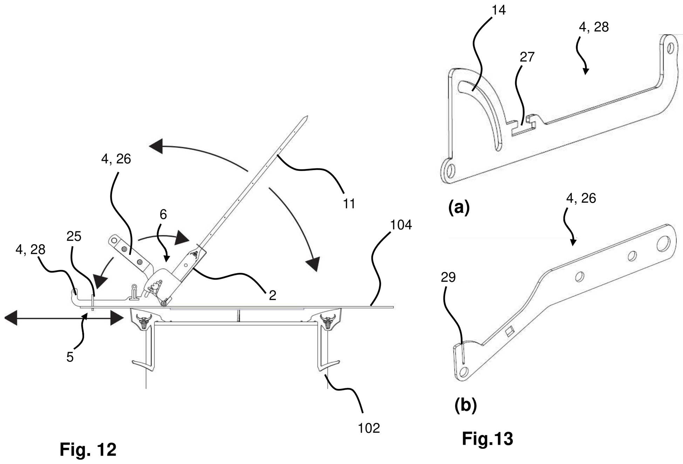

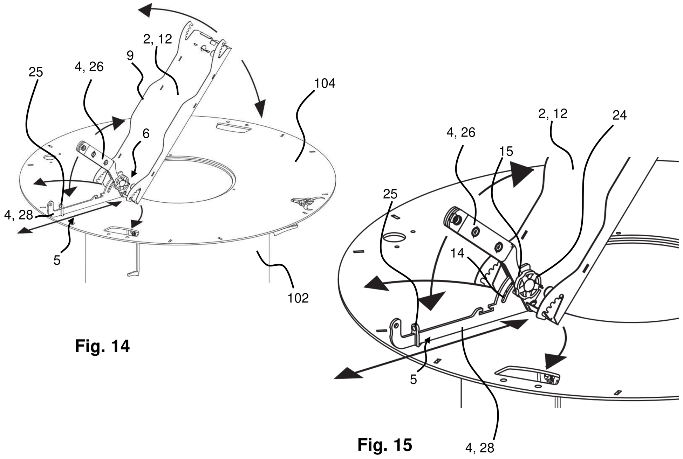

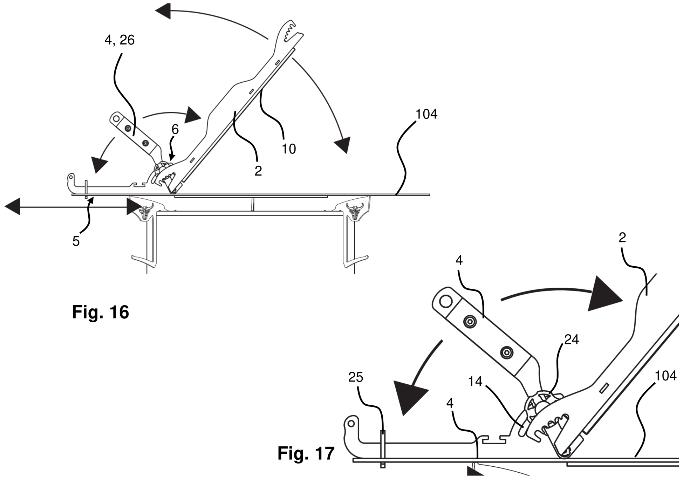

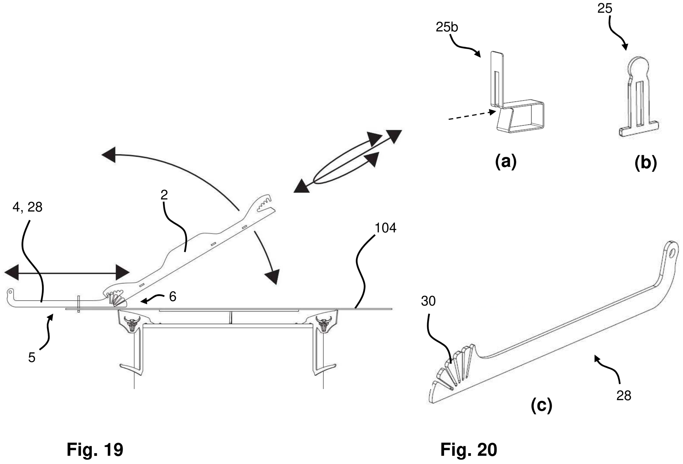

In den Figuren 10 bis 17 sind die unterschiedlichen Winkelanordnungen gezeigt, in welchen das Basiselement 2 bezüglich der Feuerplatte 104 angeordnet werden kann. Dabei ist durch die Pfeile erkennbar, in welchen translatorischen bzw. rotatorischen Verschiebungsrichtungen bzw. Rotationsebenen die unterschiedlichen Bauelemente angeordnet werden können. So ist ein erster Halteabschnitt 5 des Winkelelements 4 dazu vorgesehen, das Winkelelement 4 mit der Grillvorrichtung 7, bzw. der Feuerplatte 104, zu verbinden. Ein zweiter Halteabschnitt 6 ist dazu vorgesehen, das Winkelelement 4 mit dem Basiselement 2 zu verbinden. Über den ersten Halteabschnitt 5 kann das Winkelelement in einer beliebigen Position auf der Feuerplatte 104 montiert werden. Das Winkelelement 4 weist daher zumindest ein Schieberelement 28 auf, das in unterschiedlichem Abstand zu der Ausnehmung 105 in der Feuerplatte montiert werden kann. Die Montage kann insbesondere über Befestigungselemente 25 erfolgen, die beispielsweise in Figur 20 (a) und 20 (b) dargestellt sind. So kann das Befestigungselemente 25 als Öse ausgebildet sein, wie in Figur 20 (b) dargestellt. Die Öse ist bevorzugt an bestimmte Plattendicken der Feuerplatte 104 angepasst. Wird eine Öse nicht benötigt, kann diese in einem Adapterhalter 27, wie in Figur 13 (a) gezeigt, zwischengelagert werden. Das Befestigungselement 25b als Universaladapter kann für unterschiedliche Plattendicken eingesetzt werden, und ist vergleichbar einer Tischtuchklemme ausgeführt.

In einer möglichen Ausführungsform ist das Winkelelement 4 daher mehrteilig ausgebildet, und weist zumindest ein Griffelement 26 sowie ein Schieberelement 28 auf, wie in Figur 13 gezeigt. Diese können über eine Drehradklemmung 24 miteinander verbunden werden. Dabei kann ein Fortsatz 15 vorgesehen sein, denn einer Führungskontur 14 geführt wird. Die Führungskontur ist insbesondere teilkreisförmig ausgebildet, sodass die Schwenkbewegung des Basiselements 2 relativ zu dem Winkelelement 4 bzw. relativ zu der Feuerplatte 104 erreicht werden kann. In einer der artigen Ausführungsform ist eine stufenlose Einstellung des Winkels möglich.

Das ein Griffelement 26 kann in einer möglichen Ausführungsform eine Länge von 20 cm bis 30 cm, insbesondere 27 cm, aufweisen. Das Schieberelement 28 kann in einer möglichen Ausführungsform eine Länge von 20 cm bis 40 cm, insbesondere 30 cm aufweisen. Die Abmessungen sind beispielhaft, wobei andere Abmessungen denkbar sind.

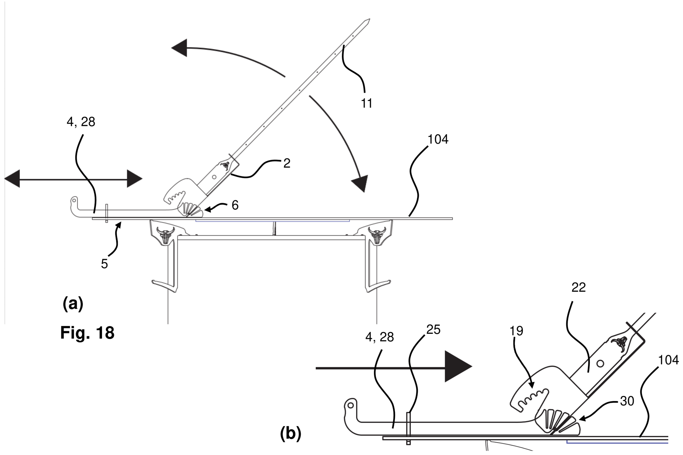

Die Figuren 18 und 19 zeigt eine weitere Ausführungsform, wobei das Winkelelement 4 einteilig ausgeführt ist, d. h. ohne das Griffelement 26. Dabei kann das Winkelelement 4 in unterschiedlichen Positionen auf der Feuerplatte 104 montiert werden. Eine stufenlose Einstellung ist jedoch nicht möglich. Hingegen kann das Basiselement 2 in unterschiedliche Rastabschnitt 30 an dem Schieberelement 28 eingesteckt werden, um in unterschiedlichen Winkeln bezüglich der Feuerplatte 104 angeordnet zu werden. Das Schieberelement 28 kann eine Länge von 30 cm bis 40 cm aufweisen, wobei auch andere Abmessungen möglich sind. Insbesondere kann die Länge an die Größe der Grillvorrichtung angepasst sein.

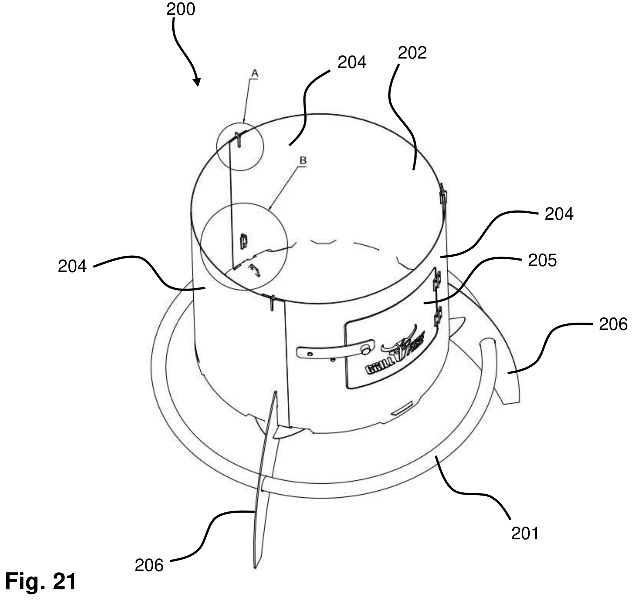

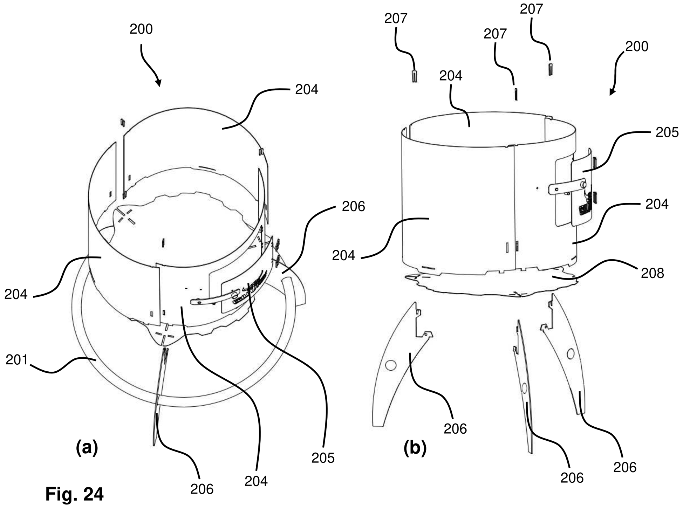

Die Figuren 21 bis 24 zeigen eine mögliche Ausführungsform einer modularen Grillvorrichtung 200. Diese weist ein tonnenförmiges Basiselement 202 auf, das aus einzelnen bogenförmigen Teilsegmenten 204 ausgebildet ist. In dieser Ausführungsform sind drei Teilsegmente 204 vorgesehen, wobei jedes der Teilsegmente 204 jeweils als Drittelkreissegment ausgebildet ist. Die Teilsegmente sind demnach im Querschnitt bogenförmig ausgebildet. Dadurch kann ein Innenraum 203 umschlossen werden, in welcher eine Wärmequelle eingebracht werden kann.

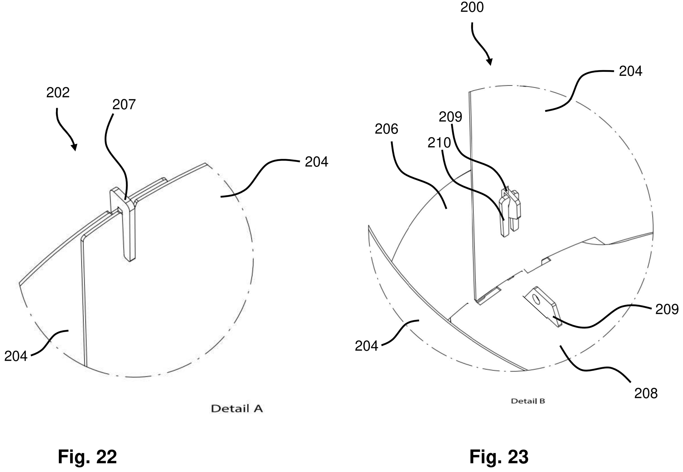

Wie in Figur 22 und Figur 23 erkennbar, können die einzelnen Module bzw. Elemente über Steckverbindungen 209 aneinander platziert werden, wobei die Steckverbindungen 209 insbesondere aus Vorsprüngen bzw. Nasen sowie Ausnehmungen ausgebildet sind. Des Weiteren können Stiftelemente 210 vorgesehen sein, mit welchen die Steckverbindungen 209 in der Lage fixiert werden können. Des Weiteren sind Klammerelemente 207 denkbar, welche beispielsweise U-förmig ausgebildet sind und als eine Art Klammer zwei Elemente, wie insbesondere zwei Teilsegmente 204, an einem Überlappstoß aneinanderhalten können. Die Verbindungen sind daher werkzeugfrei möglich.

Eine modulare Grillvorrichtung 200 kann demnach beispielsweise drei Standfüße 206 aufweisen, die nach einer Art eines Dreibeins angeordnet werden, wobei die Standfüße 206 über Steckverbindungen 209 mit einer Bodenplatte 208 sowie mit dem Basiselement 202 verbunden werden können. Die Positionierung der Standfüße 206 kann weiterhin über eine kreisförmige Fußstange 201 erfolgen, wodurch weitere Stabilität erreicht werden kann. Die kreisförmige Fußstange 201 kann durch Öffnungen in den Standfüßen 206 geführt sein.

Durch die Standfüße 206 kann weiterhin erreicht werden, dass ein größerer, luftgekühlter Abstand zum Boden hergestellt werden kann, wodurch der Untergrund vor Hitze verschont bleibt.

Vorteilhafterweise weist die modulare Grillvorrichtung 201 zumindest ein Türelement 205 auf, welches in zumindest einem Teilsegment 204 angeordnet ist. Dadurch kann eine Grilltonne bereitgestellt werden, welche seitlich zugänglich ist, sodass diese während der Nutzung neu befeuert werden kann.

Die Grillvorrichtung 200 kann zur Sicherung mithilfe eines Bodenhakens, wie insbesondere eines Karabiners, oder auch durch Schrauben am Boden gesichert werden. An einem derartigen Haken kann auch die Bodenumlenkung der justierten Feuerlage angebracht werden.

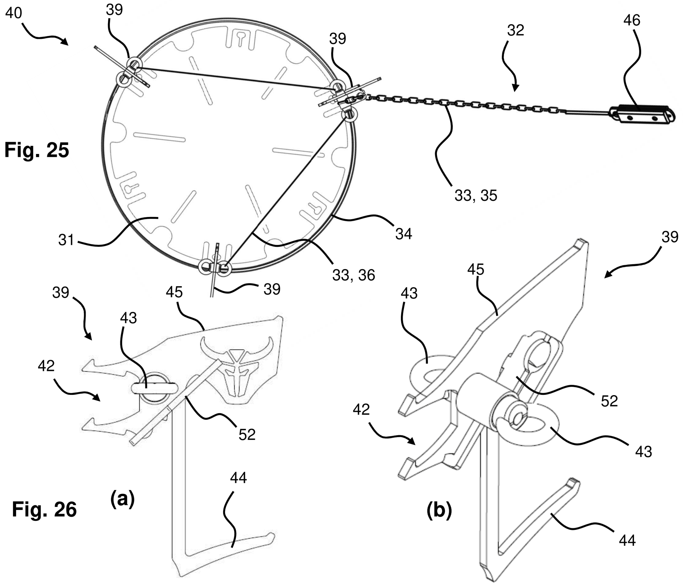

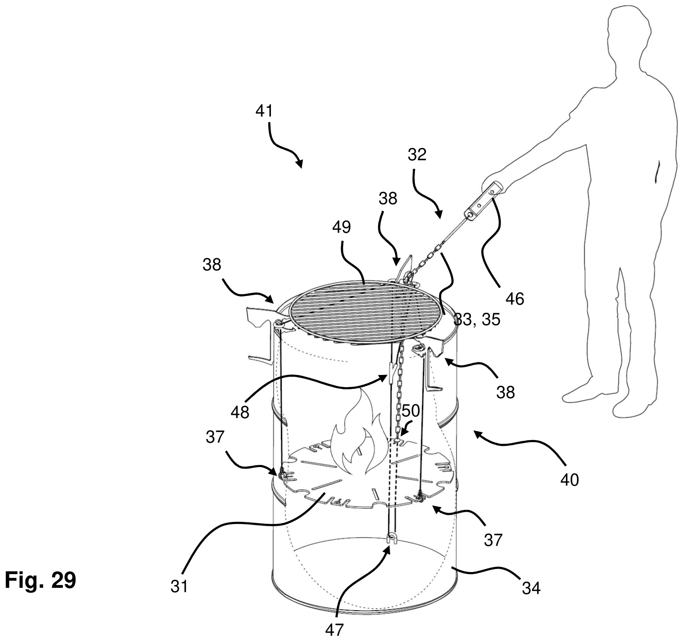

Die Figuren 25 bis 34 zeigen unterschiedliche Ausführungsformen einer justierbaren Feuerlage 40, wie diese für eine Grillvorrichtung 41 eingesetzt werden kann. Die Feuerlage 40 kann hierbei ebenso für eine Grillvorrichtung 7 gemäß der Figuren 1 und 2 bzw. 8 bis 18 eingesetzt werden. Ebenso ist es denkbar, die Feuerlage 40 für eine Grillvorrichtung 200 gemäß der Figuren 21 bis 24 einzusetzen. Die justierbare Feuerlage 40 ist daher für unterschiedliche Grillvorrichtung konzipiert und kann prinzipiell für alle zylindrischen sowie eckigen Brennräume eingesetzt werden. So kann die Feuerlage 40 beispielsweise auch bei Steckofengrills sowie Standardfeuertonnen eingesetzt werden.

Mit der erfindungsgemäßen Feuerlage 40 ist es demnach möglich eine Feuermenge bzw. Hitzemenge zu dosieren, ohne das Grillgut bzw. Grillrost zu bewegen. Dies wird dadurch erreicht, dass die Bodenplatte 31 der Feuerlage 40 in unterschiedlichen Höhen in der Grillvorrichtung 41 angeordnet werden kann. Dabei ist die Höhe von einer Bedienperson außerhalb des Grills einstellbar, ohne die Grillvorrichtung 41 öffnen zu müssen.

Es ist insbesondere möglich, die Feuerlage 40 einhändig sowie mit geringem Kraftaufwand zu bedienen, da diese durch eine Art Flaschenzug angesteuert werden kann. Die Feuerlage 40 weist daher eine Bodenplatte 31 auf, die zur Auflage einer Wärmequelle ausgebildet ist. Bei der Wärmequelle handelt es sich insbesondere um Holzkohle, Holzbriketts, Grillbriketts, Brennpaste oder einen Gasbrenner bzw. Gasgrill. Des Weiteren sind alle Wärmequellen denkbar, welche sich für die Nutzung in einer Grillvorrichtung 41 eignen.

Die Bodenplatte 31 ist mit einer Bedieneinrichtung 32 verbunden, sodass durch Ansteuern bzw. Bewegen der Bedieneinrichtung 32 die Bodenplatte 31 innerhalb der Grillvorrichtung 41 nach oben oder nach unten bewegt werden kann. Dazu weist die Bedieneinrichtung 32 zumindest ein Zugelement 33 auf, das an dem Gehäuse 34 der Grilleinrichtung 41 geführt sein kann. Bei dem Zugelement 33 handelte sich insbesondere um ein flexibles, seilförmiges Element, insbesondere um eine Kette und/oder ein Seil. Insbesondere ist das Zugelement 33 in einem Abschnitt als flexibles Kettenelement 35 ausgebildet, und in einem weiteren Abschnitt als flexibles Seilelement 36. Das Seilelement 36 dient hierbei insbesondere als Flaschenzug innerhalb des Gehäuses 34, das Kettenelement 35 dient insbesondere zur Verbindung des Flaschenzugs nach außen an eine Position außerhalb des Gehäuses 34. Das Seilelement 36 ist daher bevorzugt zumindest an zwei, insbesondere an drei Stellen, innerhalb des Gehäuses 34 parallel geführt, während das Kettenelement 35 lediglich einfach innerhalb des Gehäuses 34 und/oder außerhalb des Gehäuses 34 geführt ist. An dem Kettenelement 35 kann, insbesondere an einem Ende, ein Griffelement 46 vorgesehen sein, sodass die Bedieneinrichtung 32 komfortabel von einer Person bedient werden kann.

Wie in den Figuren 25 und 27 bis 29 dargestellt, kann eine Umlenkung des Zugelements 23 beispielsweise im oberen Bereich des Gehäuses 34 erfolgen, wobei im oberen Bereich des Gehäuses 34 bzw. im oberen Bereich der Grillvorrichtung 41 zumindest zwei, insbesondere drei, Abschnitte des Seilelements 36 zu einem Kontaktpunkt 38 geführt werden können, an welchem sich das Kettenelement 35 befindet. Eine derartige Ausführungsform eignet sich beispielsweise für Grillvorrichtung 41 mit einer Feuerplatte 104, wobei die Ausnehmung 105 in der Feuerplatte 104 ausreichend groß ausgeführt werden kann, ohne dass die schräg verlaufenden Seilelemente 36, welche in Figur 25 erkennbar sind, die Ausnehmung 105 schneiden.

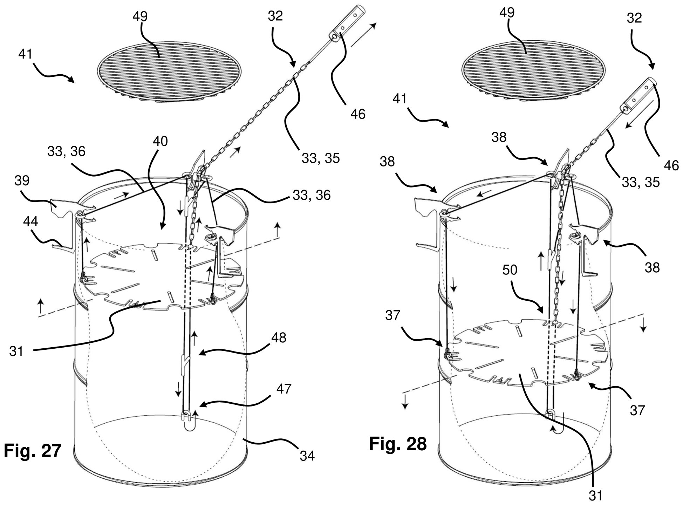

Mit anderen Worten kann gemäß Figur 27 bis 29 ein jeweiliges Ende eines Seilelements 26 mit der Bodenplatte 31 an den Angriffspunkten 37 fixiert werden. Die Seilelemente 36 können von diesen Angriffspunkten 37 vertikal nach oben zu einem jeweiligen Kontaktpunkt 38 geführt werden, an welchem jeweils ein Führungsprofil 39 vorgesehen ist. Durch das Führungsprofil 39 können die Seilelemente 26 um 90° umgelenkt, und insbesondere vertikal umgelenkt, und zu einem gemeinsamen Kontaktpunkt 38 geführt werden. An diesem gemeinsamen Kontaktpunkt 38 können die beiden Seilelemente 36 um 90° nach unten umgelenkt werden, sodass diese vertikal nach unten entlang des Gehäuses 34 bis zu einem Boden des Gehäuses geführt werden. An diesem Abschnitt zwischen dem Kontaktpunkt 38 und dem Boden kann ein Führungselemente 48 vorgesehen sein, das insbesondere verzweigt ausgeführt ist. Dadurch kann eine Art Y-Verbindung umgesetzt werden, wobei in die beiden Kopfabschnitte des Y-Profils die Seilelemente 36 getrennt voneinander eingeführt, und durch die Y-Form gemeinsame aus dem Führungselemente 48 herausgeführt werden können. Dadurch wird demnach nur "ein Seil" bis zum Boden nach unten geführt und dort um 180° umgelenkt. Nach der Umlenkung wird das "eine Seil" wieder vertikal nach oben geführt, wobei die beiden Enden der Seilelemente 36 mit einem Kettenelement 35 verbunden werden. Das Kettenelement 35 wird dann an dem Führungsprofil 39 umgelenkt, und kann insbesondere an einer Arretierungseinrichtung 52 an dem Führungsprofil 39 arretiert werden.

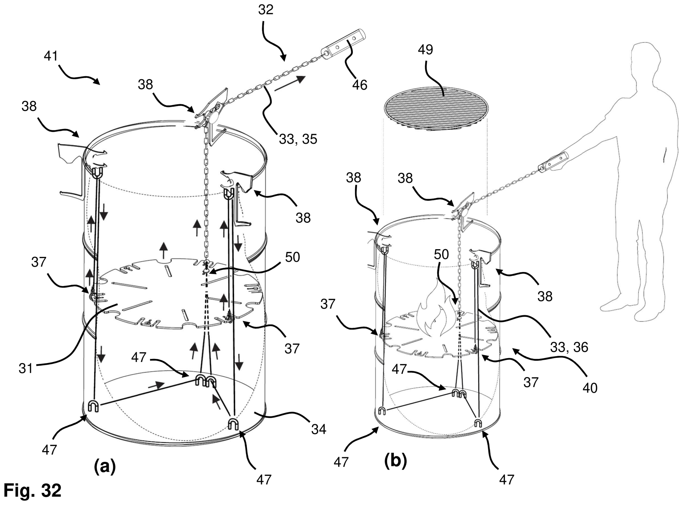

Im Unterschied dazu ist eine Ausführungsform möglich, wie diese in Figur 32 gezeigt ist. Dabei erfolgt eine Umlenkung des Zugelements 23 im unteren Bereich des Gehäuses 34 bzw. am Boden der Grillvorrichtung 41, wobei zumindest zwei Abschnitt des Seilelements 36 zu einem Bodenverankerungspunkt 47 geführt werden. Dies bietet insbesondere den Vorteil, dass die Oberfläche der Grillvorrichtung 41 durch die Seilelemente 36 nicht "durchschnitten" wird. Eine derartige Ausführungsform ist flexibler für alle Formen von Grillvorrichtungen einsetzbar.

Für die unterschiedlichen Ausführungsformen des Zugelements 33 werden insbesondere Führungsprofile 39 eingesetzt, die mit dem Gehäuse 34 verbunden werden können, wobei das Zugelement 33 entlang der Führungsprofile 39 zumindest abschnittsweise geführt werden kann. Die Führungsprofile 39 können dabei beispielsweise wie in Figur 26, 30, 31, 33 und 34 ausgeführt sein. Die Führungsprofile 39 dienen insbesondere dazu, das Zugelement 33 an Kontaktpunkten 38 umzulenken. Durch ein Führungsprofile 39 kann daher ein Zugelement 33 insbesondere um einen beliebigen Winkel umgelenkt werden, bevorzugt um 90° bis 180°.

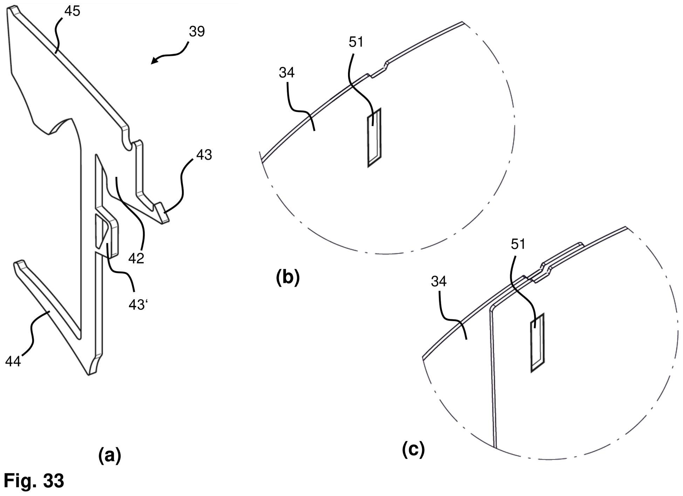

Wie in Figur 25 gezeigt, können beispielsweise drei Kontaktpunkte 38 vorgesehen sein, an welchem jeweils ein Führungsprofil 39 angeordnet ist. Die Kontaktpunkte 38, siehe auch Figur 27 bis 29, können gleichverteilt entlang eines Umfangs des Gehäuses 34 der Grillvorrichtung 41 angeordnet werden. Dabei können in dem Gehäuse 34 beispielsweise Aussparungen vorgesehen sein, wie beispielhaft in Figur 33 (b) bzw. 33 (c) gezeigt. Die Führungsprofile 39 können daher ebenso eine Art Steckverbindung ausbilden, wie diese beispielhaft bezüglich der modularen Grillvorrichtung 200 durch die Steckverbindung 209 dargestellt ist.

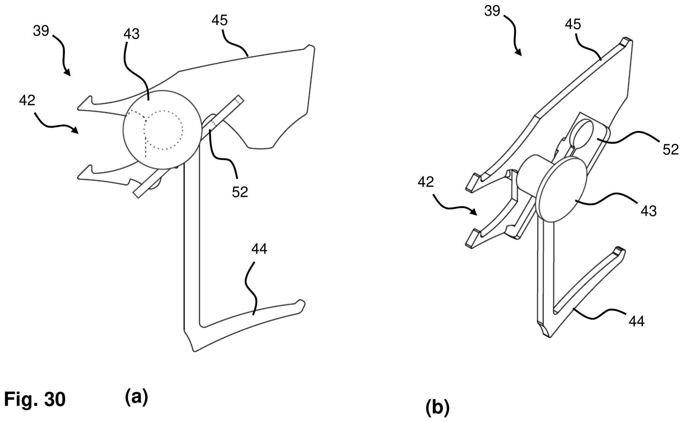

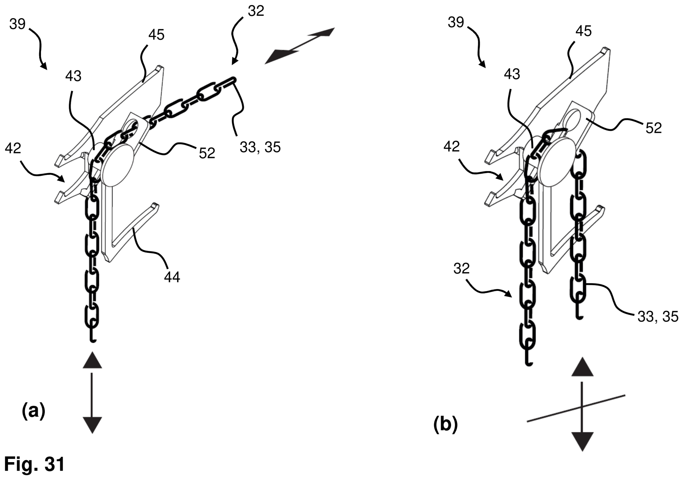

Die Führungsprofile 39 sind bevorzugt derart ausgestaltet, dass diese an einer Oberseite des Gehäuses 34 überstehen, und daher insbesondere gleichzeitig einen Auflagerabschnitt 45 aufweisen, der zur Auflage einer Feuerplatte 104 oder eines Grillrostes 49 ausgebildet sein kann. Es ist weiterhin denkbar, dass an den Führungsprofilen 39 zumindest ein Hakenabschnitt 44 vorgesehen ist, der zum Einhängen von Equipment, das beim Grillen eingesetzt wird, ausgebildet ist. So können beispielsweise Grillzangen o. Ä. an dem Hakenabschnitt 44 angeordnet werden. In einer vorteilhaften Ausführung weisen die Führungsprofile 39 zumindest einen Führungsabschnitt 43 auf, der zur Umlenkung des Zugelements 33 ausgebildet ist. Insbesondere ist das Zugelement 33 in dem Abschnitt, in welchem es umgelenkt wird, als Seilelement 36 ausgeführt, um eine geräuscharme sowie reibungsarme Umlenkung zu ermöglichen. Das Führungsprofil 39 kann daher beispielsweise Öffnungen aufweisen, die beispielsweise durch ein Ringelement, siehe Führungsabschnitt 43 in Figur 26, oder eine Öffnung in einem Blechelement, siehe Führungsabschnitt 43' in Figur 26, ausgebildet sind. Das Zugelement 33 kann dabei durch das Ringelement und/oder die Öffnung geführt werden, wie dies beispielhaft in Figur 25 gezeigt ist. Es ist weiterhin denkbar, dass das Führungsprofil 39 zumindest einen Ring, einen Schäkel, eine Rolle, eine Kausche, eine Ringöse, eine Ringschraube und/oder eine Ringmutter oder dergleichen aufweist. Eine Ausführungsform mit einer Rolle bzw. einem hülsenförmigen Element ist beispielhaft in Figur 30 und 31 dargestellt. Dabei können die Führungsprofile 39 auch ohne die Arretierungseinrichtung 52 ausgeführt sein.

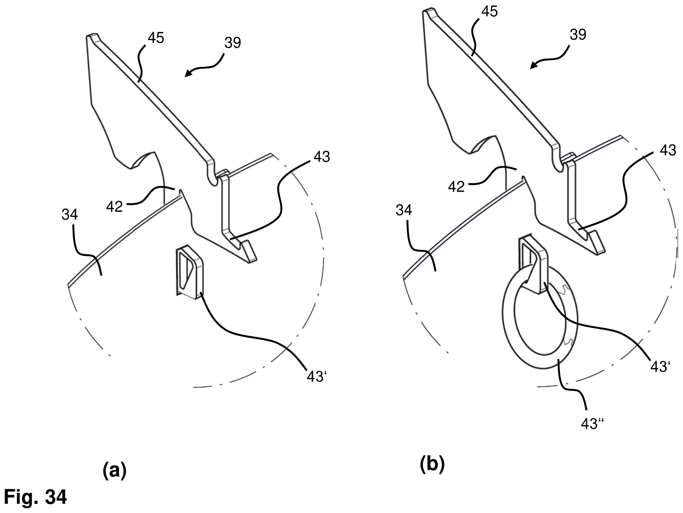

Gemäß der Ausführungsform nach Figur 33 und 34 können die Führungsprofile 39 durch eine Öffnung 51 in dem Gehäuse 34 geführt werden, und dabei beispielsweise auch einen Überlappstoß des Gehäuses 34 arretieren, und insbesondere für eine modulare Grillvorrichtung 200 dienen. Das Führungsprofil 39 kann beispielsweise zwei Vorsprünge aufweisen, die gemeinsam eine Führungsabschnitt 43, 43' ausbilden. Einer der Vorsprünge, gekennzeichnet mit dem Bezugszeichen 43', kann durch die Öffnung 51 in dem Gehäuse 34 geführt werden. Der andere Vorsprung, gekennzeichnet mit dem Bezugszeichen 43, kann von oben über das Gehäuse geführt werden. Dabei kann der Vorsprung einen Hinterschnitt aufweisen, sodass der Führungsabschnitt 43 als eine Art Schnappelement bzw. Arretierungselement ausgebildet werden kann. Dafür kann beispielsweise auch ein Rücksprung in dem Gehäuse 34 vorgesehen sein, wie in den Figuren 33 (b) und 33 (c) gezeigt ist. Um das Führungsprofil 39 an dem Gehäuse 34 unlösbar zu fixieren kann eine Art Karabiner, insbesondere ein ringförmiges Karabinerelement 43" vorgesehen sein, wie beispielhaft in Figur 34 (b) gezeigt. Dieser kann durch den Führungsabschnitt 43' geführt werden, um ein Lösen des Führungsprofils 39 von dem Gehäuse 34 zu verhindern. Der Karabinerelement 43'' kann ebenso zur Führung des Kettenelements 35 bzw. des Seilelements 36 genutzt werden.

Die Feuerlage 40 kann weiterhin zumindest zwei Angriffspunkte 37 aufweisen, die an der Bodenplatte 31 vorgesehen sind. Bevorzugt sind die Angriffspunkte 37 an die Positionen der Kontaktpunkte 38 angepasst. Demnach kann das Zugelement 33, insbesondere ausgebildet als Seilelement 36, von einem Kontaktpunkt 38 zu einem Angriffspunkt 37 geführt werden, wobei das Zugelement 33 in diesem Abschnitt bevorzugt vertikal innerhalb des Gehäuses 34 verläuft. Bevorzugt ist ein Ende des Zugelements 33 an einem Angriffspunkt 37 fixiert. Von dort kann das Zugelement 33 vertikal nach oben in Richtung Kontaktpunkt 38 geführt werden, wobei es durch das Führungsprofil 39 in dem Kontaktpunkt 38 umgelenkt, insbesondere um 90° umgelenkt werden kann, siehe Figur 27 und 28. Die Bodenplatte 31 kann zum Beispiel Ausnehmungen, insbesondere Durchgangslöcher, aufweisen, an welchen das Zugelement 33 verankert werden kann.

In einer weiteren Ausführungsform kann eine Führung 50 vorgesehen sein, die an der entsprechenden Position des dritten Kontaktpunktes 38 vorgesehen ist, siehe Figur 28. An dieser Führung 50 kann das Zugelement durch die Bodenplatte 31 hindurchgeführt werden. Bevorzugt kann an einer dazu korrespondierenden Position auf dem Boden des Gehäuses 34 ein Bodenverankerungspunkt 47 vorgesehen sein, durch welchen das Zugelement 33 geführt werden kann. An diesem Bodenverankerungspunkt 47, der beispielsweise durch eine Lasche oder Öse ausgeführt ist, kann das Zugelement 33 um 180° umgelenkt und zu der Führung 50 zurückgeführt werden.

In einer weiteren Ausführungsform kann zumindest ein seitliches Führungselement 48 vorgesehen sein, das verschiebbar innerhalb des Gehäuses 34 gelagert ist. Insbesondere ist das Führungselement 48 lediglich an dem Zugelement 33 gelagert. So kann durch das Führungselemente 48 beispielsweise eine Abzweigung ausgebildet werden, wobei zwei parallel geführte Abschnitte des Zugelements 33 auf der einen Seite in das Führungselement 48 eingeführt werden, und auf der anderen Seite des Führungselements 48 davon abgezweigt herausgeführt werden. Insbesondere ist das Führungselement 48 an einer korrespondierenden Position zu dem Kontaktpunkt 38 angeordnet, an welchem das Kettenelement 35 geführt ist.

Innerhalb des Gehäuses 34 können dadurch insbesondere 3 Bereiche ausgebildet werden, an welcher das Zugelement 33 vertikal innerhalb des Gehäuses 34 geführt werden kann. Bevorzugt ist das Zugelement 33 an zumindest einer Position an dem Boden des Gehäuses 34 geführt gelagert. In den Figuren 27 und 28 ist durch die 2 Richtungen gekennzeichnet, in welche Richtung sich das Zugelement 33 verschiebt, wenn die Bodenplatte 31 angehoben, siehe Figur 27, oder abgesenkt, siehe Figur 28, wird. Das Heben sowie Senken kann durch eine Person erfolgen, die händisch das Griffelement 46 entweder herauszieht, oder loslässt. Das Griffelement 46 ist bevorzugt direkt am Rand eines Rahmens der Grillvorrichtung bzw.

Feuerstelle vorgesehen. Dabei kann eine Arretierungseinrichtung 52, insbesondere eine Arretierungsöse, vorgesehen sein, durch welche das Kettenelement 35 geführt werden kann. Insbesondere wird das Kettenelement 35 waagrecht zu einer Bodenebene geführt, wenn das Griffelement 46 in der Hand einer Person gehalten wird, siehe Fig. 31 (a). Wird das Griffelement 46 losgelassen, so sinkt das Kettenelement 35 nach unten ab, siehe Fig. 31 (b). Gleichzeitig wird es aufgrund des Eigengewichts der Bodenplatte 31 mit der Feuerlage ein Stück in Richtung des Gehäuses 34 hineingezogen, wodurch sich das Kettenelement 35 an der Arretierungseinrichtung 52 verhaken und arretieren kann. Dadurch kann eine gewünschte Feuerlage arretiert werden.

Die Arretierungseinrichtung 52 kann zumindest einen Vorsprung aufweisen, der sich in einem Zwischenraum der Kette bzw. des Kettenglieds einfädeln kann.

Die Arretierungseinrichtung 52 kann ein Durchgangsloch aufweisen, das zwei Bereiche aufweist, die jeweils an unterschiedliche Querschnitte des Kettenelements 35 angepasst sind. Insbesondere ist ein erster Bereich mit einem größeren Durchmesser als ein zweiter Bereich vorgesehen, sodass das Kettenelement 35 durch den ersten Bereich gezogen werden kann, wenn dieses von einem Benutzer gehalten wird, siehe Fig. 31 (a). Der erste Bereich ist daher insbesondere mit einem runden Querschnitt vorgesehen. Der zweite Bereich ist bevorzugt schlitzförmig vorgesehen, und mit dem ersten Bereich verbunden. Wird das Kettenelement 35 losgelassen, sinkt es nach unten ab, wie in Figur 31 (b) gezeigt, wodurch sich das Kettenelement 35 selbstausrichten kann und in den schlitzförmigen zweiten Bereich eingerastet.

Weiterhin kann die Arretierungseinrichtung 52 beispielsweise an einem Führungsprofil 39 integriert oder montiert vorgesehen sein, wie in Fig. 31 gezeigt.

Figur 32 zeigt eine weitere Ausführungsform, in welcher das Zugelement 33 entlang einer Bodenfläche des Gehäuses 34 an mehr als einem Punkt umgelenkt wird. Vorteilhafterweise können dabei die diagonal verlaufenden Abschnitte des Zugelements 33 an einer Oberseite des Gehäuses 34 entfallen. Die Grillvorrichtung 41 kann daher eine flexibel einsetzbare Oberfläche aufweisen. In einer derartigen Ausführung wird das Seilelement 36 an zumindest zwei Stellen parallel innerhalb des Gehäuses 34 geführt. Daher werden die Seilelemente 36 an zwei Kontaktpunkten 38 um 180° umgelenkt, um in Richtung des Bodens des Gehäuses 34 geführt zu werden. Am Boden des Gehäuses 34 sind daher an drei Positionen Bodenverankerungspunkte 47 vorgesehen, wobei das Seilelement 36 von einem Bodenverankerungspunkte 47 zu einem weiteren Bodenverankerung 47 geführt werden kann.

Mit anderen Worten ausgedrückt kann in einer Ausführungsform nach Fig. 32 jeweils ein Ende eines Seilelements 36 an der Bodenplatte 31 befestigt werden. Die Seilelemente 36 werden dabei vertikal nach oben zu einem darüberliegenden Kontaktpunkt 38 geführt, an welchem sich jeweils ein Führungsprofil 39 befindet. Durch das Führungsprofil 39 können die Seilelemente 36 um 180° umgelenkt, an den Angriffspunkt 37 an der Bodenplatte 31 vorbeigeführt, und bis zu der Bodenplatte des Gehäuses 34 geführt werden. An dort angeordneten Bodenverankerungspunkten 47 können die Seilelemente 36 um 90° umgelenkt, und zu einem gemeinsamen Bodenverankerungspunkt 47 geführt werden, an welchem sich die Seilelemente 36 treffen. Von dort können beide Seilelemente 36 parallel nach oben geführt werden. Dabei können die beiden Seilelemente eine Führung 50, welche in der Bodenplatte 31 angeordnet ist, passieren. Des Weiteren können die beiden Seilelemente 36 zu einem gemeinsamen Kettenelement 35 vereint werden, wobei das Kettenelement zu einem direkt oberhalb der Führung 50 angeordneten Führungsprofil 39, welches eine Arretierungseinrichtung 52 aufweist, geführt wird. Von dort kann das Kettenelement 35 aus dem Gehäuse 34 geführt, und von einer Person erreicht werden.

Wie in den unterschiedlichen Ausführungsformen dargestellt können die Zugelemente 33 in Verbindung mit den Führungsprofilen 39 zumindest teilweise eine Art Flaschenzug ausbilden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Haltevorrichtung
- 2: Basiselement
- 3: Grillgut
- 4: Winkelelement
- 5: erster Halteabschnitt
- 6: zweiter Halteabschnitt
- 7: Grillvorrichtung
- 8: Winkel
- 9: Aufstellfläche
- 10: Positionierfläche
- 11: Grillspieß
- 12: Hitzeschild
- 14: Führungskontur
- 15: Fortsatz
- 16: Grillaufsatz
- 17: Abziehelement
- 18: Clipelement
- 19: Rastabschnitt
- 20: Ausnehmung
- 21: Spreizring
- 22: Griffelement
- 23: Aufnahme
- 24: Drehradklemmung
- 25: Befestigungselement
- 26: Griffelement
- 27: Adapterhalter
- 28: Schieberelement
- 29: Basiselementhalter
- 30: Rastabschnitt
- 31: Bodenplatte
- 32: Bedieneinrichtung
- 33: Zugelement
- 34: Gehäuse
- 35: Kettenelement
- 36: Seilelement
- 37: Angriffspunkt
- 38: Kontaktpunkt
- 39: Führungsprofil
- 40: Feuerlage
- 41: Grillvorrichtung
- 42: Verbindungsabschnitt
- 43: Führungsabschnitt
- 44: Hakenabschnitt
- 45: Auflagerabschnitt
- 46: Griffelement
- 47: Bodenverankerung
- 48: seitliche Führungselemente
- 49: Grillrost
- 50: Führung
- 51: Aussparung
- 52: Arretierungseinrichtung

- 101: Grillvorrichtung
- 102: tonnenförmiges Element
- 103: Innenraum
- 104: Feuerplatte
- 105: Ausnehmung

- 200: modulare Grillvorrichtung
- 201: kreisförmige Fußstange
- 202: tonnenförmiges Basiselement
- 203: Innenraum
- 204: bogenförmige Teilsegmente
- 205: Türelement
- 206: Standfuß
- 207: Klammerelement
- 208: Bodenplatte
- 209: Steckverbindung
- 210: Stiftelement

## Patentansprüche

1. Haltevorrichtung (1) zum Halten von Grillgut (3), mit:
einem Basiselement (2), das zum direkten oder indirekten Halten des Grillguts (3) ausgebildet ist,
einem Winkelelement (4), das zur Ausrichtung des Basiselements (2) gegenüber einer Grillvorrichtung (7) ausgebildet ist,
wobei das Winkelelement (4) zur Ausrichtung des Basiselements (2) in zumindest zwei unterschiedlichen Winkeln (8) bezüglich der Grillvorrichtung (7) ausgebildet ist, und
wobei das Basiselement (2) zum Halten des Grillguts (3) während eines Grillvorgangs und während eines Serviervorgangs ausgebildet ist.

2. Haltevorrichtung (1) nach Anspruch 1,
**dadurch gekennzeichnet,**
**dass** das Basiselement (2) auf einer ersten Seite zumindest eine Aufstellfläche (9) zum Aufstellen des Basiselements (2) während des Serviervorgangs aufweist und auf einer zweiten Seite zumindest eine Positionierfläche (10) zum Positionieren von zumindest einem Grillgut (3) während des Grillvorgangs aufweist, wobei auf der zweiten Seite bevorzugt zumindest ein Grillaufsatz einsteckbar ist.

3. Haltevorrichtung (1) nach einem der vorstehenden Ansprüche,
**dadurch gekennzeichnet,**
**dass** das Basiselement (2) zumindest eine Aufnahme für einen Grillspieß (11) aufweist und/oder dass das Basiselement (2) als Hitzeschild (12) ausgebildet ist.

4. Haltevorrichtung (1) nach einem der vorstehenden Ansprüche,
**dadurch gekennzeichnet,**
**dass** das Winkelelement (4) einen ersten Halteabschnitt (5), der zur Befestigung an der Grillvorrichtung (7) ausgebildet ist, und einen zweiten Halteabschnitt (6), der zur Befestigung mit dem Basiselement (2) ausgebildet ist, aufweist, wobei insbesondere der erste Halteabschnitt (5) an einem Schieberelement (28) des Winkelelements (4) angeordnet ist, das entlang einer Feuerplatte (104) anordnebar und an der Feuerplatte (104) befestigbar ist.

5. Haltevorrichtung (1) nach einem der vorstehenden Ansprüche,
**dadurch gekennzeichnet,**
**dass** das Winkelelement (4) eine Führungskontur (14) aufweist, wobei ein Fortsatz (15) in der Führungskontur (14) derart geführt ist, dass eine stufenlose Winkeleinstellung ermöglicht wird.

6. Modulare Grillvorrichtung (200), mit:
einem tonnenförmigen Basiselement (202), aufweisend einen Innenraum (203) zur Aufnahme einer Wärmequelle, wobei das tonnenförmige Basiselement (202) zum Tragen einer Feuerplatte (104) ausgebildet ist,
wobei das tonnenförmige Basiselement (202) aus einzelnen bogenförmigen Teilsegmenten (204) ausgebildet ist, und
wobei das tonnenförmige Basiselement (202) ein Türelement (205) aufweist, das einen seitlichen Zugang in das tonnenförmige Basiselement (202) ermöglicht.

7. Modulare Grillvorrichtung (200) nach Anspruch 6,
**dadurch gekennzeichnet,**
**dass** eine kreisförmige Fußstange (201) umfasst ist, welche durch Standfüße (206) der Grillvorrichtung (200) geführt ist.

8. Modulare Grillvorrichtung (200) nach einem der Ansprüche 6 oder 7,
**dadurch gekennzeichnet,**
**dass** die Teilsegmente (204) über Klammerelemente (207) derart verbunden sind, dass eine werkzeugfreie Montage und Demontage möglich ist.

9. Modulare Grillvorrichtung (200) nach einem der Ansprüche 6 bis 8,
**dadurch gekennzeichnet,**
**dass** eine Bodenplatte (208) und Standfüße (206) über Steckverbindungen (209) mit dem tonnenförmigen Basiselement (202) verbunden sind.

10. Feuerlage (40) für eine Grillvorrichtung (41), mit;
einer Bodenplatte (31), die zur Auflage einer Wärmequelle ausgebildet ist, und
einer Bedieneinrichtung (32), die mit der Bodenplatte (31) verbunden und zum Heben und Senken der Bodenplatte (31) ausgebildet ist,
wobei die Bedieneinrichtung (32) zumindest ein Zugelement (33) aufweist, das an einem Gehäuse (34) der Grilleinrichtung (41) führbar ist, wobei durch Verschiebung des Zugelements (33) die Bodenplatte (31) bewegbar ist.

11. Feuerlage (40) nach Anspruch 10,
**dadurch gekennzeichnet,**
**dass** das Zugelement (33) als flexibles Ketten- und/oder Seilelement (35, 36) ausgebildet ist, das an zumindest zwei Angriffsunkten (37) mit der Bodenplatte (31) verbunden und/oder an zumindest drei Kontaktpunkten (38) an dem Gehäuse (34) führbar ist.

12. Feuerlage (40) nach Anspruch 10 oder 11,
**dadurch gekennzeichnet,**
**dass** zumindest ein Führungsprofil (39) umfasst ist, das mit dem Gehäuse (34) verbindbar ist, wobei das Zugelement (33) entlang des Führungsprofils (39) geführt ist.

13. Feuerlage (40) nach Anspruch 12,
**dadurch gekennzeichnet,**
**dass** das Führungsprofil (39) einen Verbindungsabschnitt (42) zum Verbinden mit dem Gehäuse (34), einen Führungsabschnitt (43) zum Führen des Zugelements (33), einen Hakenabschnitt (44) zur Ausbildung eines Hakenelements und/oder einen Auflagerabschnitt (45) zum Lagern einer Feuerplatte (104) oder eines Grillrostes (49) aufweist.

14. Feuerlage (40) nach einem der Ansprüche 10 bis 13, **dadurch gekennzeichnet,**
**dass** das Zugelement (33) zumindest abschnittsweise innerhalb des Gehäuses (34), insbesondere parallel entlang einer Gehäusewand, führbar ist und das Bedienelement (32) ein Griffelement (46) aufweist, das mit dem Zugelement (33) verbunden und außerhalb des Gehäuses (34) anordenbar ist.

15. Grillvorrichtung, insbesondere modulare Grillvorrichtung nach einem der Ansprüche 6 bis 9, umfassend eine Haltevorrichtung nach einem der Ansprüche 1 bis 6 und/oder eine Feuerlage (30) nach einem der Ansprüche 11 bis 14.
